# EUROPEAN PATENT APPLICATION

(11) **EP 4 657 123 A1**
(43) Date of publication of application: **03.12.2025**
(21) Application number: 24178346.3
(22) Date of filing: 28.05.2024
(51) Int. Cl.: G01V 3/08, G01N 27/22

(54) **GARDEN APPLIANCE WITH A RAIN DETECTION SENSOR**

(71) Applicant: Husqvarna AB, 561 82 Huskvarna (SE)
(72) Inventor: MERKLE, Martin, 89168 NIEDERSTOTZINGEN (DE); ANDRIOF, Frederik, 89171 ILLERKIRCHBERG (DE)
(74) Representative: Finkele, Rolf

(57) **Abstract**

A sensor unit **(106)** for sensing rain drops **(208)** on an outer surface **(104)** of a device **(100),** particularly a gardening device **(100),** inside which the sensor unit **(106)** is mounted is provided. The sensor unit **(106)** has a first electrode **(202)** and a second electrode **(204)** generating a primary electric field (F1) between the first electrode **(202)** and the second electrode **(204).** The primary electric field **(F1)** comprises primary electric field lines. The sensor unit **(106)** is characterized in that the sensor unit **(106)** further comprises a third electrode **(206)** disposed between the first electrode **(202)** and the second electrode **(204).** The first electrode **(202)** and the third electrode **(206)** generate a secondary electric field **(F2)** between the first electrode **(202)** and the third electrode **(206).** The secondary electric field **(F2)** comprises secondary electric field lines. The secondary electric field lines of the secondary electric field **(F2)** direct the primary electric field lines of the primary electric field **(F1)** farther towards the outer surface **(104)** of the gardening device **(100).**

## Description

### TECHNICAL FIELD

The present disclosure relates to a garden appliance, particularly with a rain detection sensor.

### BACKGROUND

Precipitation sensors are used, for example, for building automation, for example to trigger window and awning controls when precipitation begins. Reliable, early detection of rain events and the recognition of a new precipitation event in changeable weather are important. For example, a roof window that is opened after a rain shower must also be closed again when it starts raining again. Precipitation sensors can also be used to control irrigation systems and monitor items such as laundry hanging outside. Precipitation sensors are also part of weather stations.

In addition to mechanical and optical rain sensors, purely electronic precipitation sensors are known in particular, which work according to the capacitive or resistive measuring method. Two electrodes are used as a sensor surface between which the electrical capacity or resistance is measured and compared with a threshold value to be determined. Resistive sensors have the disadvantage that open, unprotected electrodes have to be used, which decompose over time through corrosion and, when using direct current, through electrolysis. The electrodes of capacitive sensors can be insulated with a layer of varnish or foil and thus protected against corrosion. Capacitances can be determined by measuring the voltage in an LC resonant circuit or the charge/discharge times.

An example is provided by European patent application EP 4 143 973 A1 (hereinafter referred to as '973 reference). The '973 reference discloses a rain detection device for sensing rain drops on a surface. At least one sensor unit has at least one capacitive sensor element. The sensor element is designed and/or disposed such that a capacitance characteristic of the sensor element changes based on an object contacting the surface. At least one evaluation unit is designed to detect rain drops on the surface based on a differential signal of the sensor element. The evaluation unit is designed to detect a rain drop on the surface, based on a symmetry characteristic of the differential signal, more particularly with respect to a zero point.

### SUMMARY OF THE INVENTION

It is an objective of the present invention to provide a humidity measurement device capable of reliably measuring a presence of rain drops on a surface, and hence for measuring a humidity on the surface.

According to an aspect of the present invention, a sensor unit for sensing rain drops on an outer surface of a device inside which the sensor unit is mounted, is provided. The device is particularly a gardening device. The sensor unit includes a first electrode and a second electrode. The first electrode and the second electrode generate a primary electric field therebetween. The primary electric field comprises primary electric field lines. The sensor unit is characterized in that the sensor unit further comprises a third electrode disposed between the first electrode and the second electrode. The first electrode and the third electrode generate a secondary electric field between the first electrode and the third electrode. The secondary electric field comprises secondary electric field lines. The secondary electric field lines of the secondary electric field direct the primary electric field lines of the primary electric field farther towards the outer surface of the device.

As the primary electric field lines of the primary electric field are directed farther towards the outer surface of the device, a greater amount of the primary electric field lines are present near or outside the outer surface of the device. Thereby, the rainfall or raindrops are measurable in a more accurate manner. Further, the presence of the primary electric field lines outside of the outer surface or outside of the housing of the device enables a more reliable measurement of the rain drops.

A gardening device according to the present invention may denote a device which is used in a garden for performing gardening tasks. An exemplary gardening device may for example be a watering device such as a sprinkler, a sprayer or a gun, an automatic watering device, an automatic lawn mower or a pump.

According to an exemplary embodiment of the invention, the secondary electric field lines of the secondary electrical field direct the primary electric field lines of the primary electric field farther away from the first electrode and/or the second electrode. Directing the primary electric field lines of the primary electric field farther away from the first electrode and/or the second electrode according to the present invention may denote that a maximum distance between the primary electric field lines and the first electrode and/or the second electrode is directed farther away from the first electrode and/or the second electrode. Particularly, the primary electric field lines respectively the secondary electric field lines extend in an arc-shape between the respective electrodes. Further, the distance between the electric field lines and the respective electrode may be measured perpendicular to the respective electrode.

Thereby, a more reliable measurement of presence of any rainwater or rain drops on the housing of the device is providable.

According to an exemplary embodiment of the invention, the second electrode is placed at a first distance from the first electrode, and the third electrode is placed at a second distance from the first electrode. The distance between the first electrode and the second electrode respectively the first electrode and the third electrode is carefully selected to generate the most appropriate combination of the primary electrical field and the secondary electric field. Thereby, a reliable measurement of presence of any rainwater or rain drops on the housing of the device is providable.

The first distance is measured from a middle of the first electrode to a middle of the second electrode. Similarly, the second distance is measured from the middle of the first electrode to a middle of the third electrode.

The middle of the first electrode, the second electrode and the third electrode is a middle of a length of the respective electrode seen in a cross-section perpendicular to a main surface of the respective electrode. Hence, when the third electrode is positioned in the middle between the first electrode and the second electrode, the second distance is substantially half of the first distance.

According to an exemplary embodiment of the invention, the first distance is substantially twice the second distance. Such a positional arrangement indicates that the third electrode is positioned equidistant to the first electrode and the second electrode. In other words, the positioning is such that the third electrode, particularly the middle of the third electrode, is positioned in the middle between the first electrode, particularly the middle of the first electrode, and the second electrode, particularly the middle of the second electrode. Thereby, the secondary electric field lines have a greater respectively steeper gradient near a main surface of the first electrode than the secondary electric field lines. Hence, the secondary electric field lines push the primary electric field lines further away from the first electrode. Thereby, an area in which the presence of any rainwater or rain drops on the housing of the device is measurable is increasable. Further, the area in which the sensor unit inside the housing may be positioned, may be increased such that the sensor unit does not has to be mounted to the surface on which the presence of rain is measured.

According to an exemplary embodiment of the invention, the first distance is smaller than twice the second distance. This positional arrangement indicates that the third electrode, particularly the middle of the third electrode, is positioned nearer to the second electrode, particularly the middle of the second electrode, compared to the first electrode, particularly the middle of the first electrode. This specific arrangement may be used when the sensor unit is mounted on or near the surface on which the presence of rainwater or raindrops is measured. Thereby, the accuracy of a measurement of the presence of rainwater or rain drops on a nearby surface may be increased in an easy and efficient way.

According to an exemplary embodiment of the invention, the first distance is smaller than twice the second distance. This positional arrangement indicates that the third electrode, particularly the middle of the third electrode, is positioned nearer to the second electrode, particularly the middle of the second electrode, compared to the first electrode, particularly the middle of the first electrode. Thereby, the secondary electric field lines have a further increased gradient near a main surface of the first electrode than the secondary electric field lines. Hence, the secondary electric field lines push the primary electric field lines even further away from the first electrode. Thereby, the housing may have an increased wall thickness, or the sensor unit may be positioned further away from the surface on which the presence of rainwater or raindrops is measured respectively further inside the housing. Hence, an area of application of the sensor unit may be increased.

According to an exemplary embodiment of the invention, the first electrode forms an excitation plate, and/or the second electrode forms a first sense plate, and/or the third electrode forms a second sense plate. Thus, there are two set of electric fields generated, namely the primary electric field between the first electrode and the second electrode and the secondary electric field between the first electrode and the third electrode. The primary electric field and the secondary electric field interact with each other such that the secondary electric filed lines direct the primary electric field lines farther away from the three electrodes and thereby towards the outer surface of the device. Thereby, an area in which a presence of any rainwater or rain drops on the housing of the device is measurable, is increased. Hence, the accuracy of rainwater or rain drop detection is increasable.

According to an exemplary embodiment of the invention, at least one of the first electrode, the second electrode and the third electrode is a planar electrode. The planar shape of an electrode helps to maintain a compact structure and enables overall reduction in size of the sensor unit. Hence, a compact sensor unit may be providable.

According to an exemplary embodiment of the invention, the first electrode, the second electrode and the third electrode are arranged in one common plane. Such an arrangement helps in efficiently positioning the first electrode, the second electrode and the third electrode on a planar surface while assembling the device.

According to an aspect of the present invention, a device includes a housing having an outer surface, and a sensor unit according to any one of the described exemplary embodiments, wherein the sensor unit is mounted inside the housing. The gardening device making use of the sensor unit mounted inside the housing, can measure the presence of rainwater or rain drops on an outer surface of the housing in an efficient way.

According to an exemplary embodiment of the invention, the gardening device further comprises a PCB, wherein the sensor unit is mounted on a main surface of the PCB. The PCB enables compact structural details and efficient assembly of the device. Further, the PCB allows the use of a standardized part and hence to provide a cost-efficient sensor unit.

According to an exemplary embodiment of the invention, the sensor unit is mounted inside the housing with direct contact to the housing. The sensor unit being in direct contact with the housing reduces a distance between the electrodes and the outer surface of the housing. Therefore, a rainwater detection may be more accurate and/or an area in which a presence of rainwater or raindrops are detectable may be increased.

According to an exemplary embodiment of the invention, the gardening device is at least one of a watering device, a contour sprinkler, a robotic mower, and a watering computer. Thereby, an irrigation schedule or a mowing may be synchronized with the rainwater detection results. Hence, a water supply may be accordingly controlled. This may result in substantial savings in terms of water and power, as well as lead to improved plant health based on an optimized irrigation.

According to an aspect of the present invention, a method to sense rain drops on an outer surface of a gardening device is provided. The method includes providing a sensor unit having a first electrode and a second electrode. The method includes generating a primary electric field between the first electrode and the second electrode, wherein the primary electric field comprises primary electric field lines. The method is characterized in that the method includes disposing a third electrode between the first electrode and the second electrode. The method further includes generating a secondary electric field between the first electrode and the third electrode, wherein the secondary electric field comprises secondary electric field lines. The method includes directing the primary electric field lines of the primary electric field farther towards the outer surface of the device by the secondary electric field lines of the secondary electric field.

The method aims to direct the primary electric field lines of the primary electric field farther towards the outer surface of the device. Thus, a relatively larger proportion of the primary electric field lines are present near or outside the outer surface of the gardening device. This helps in measuring the rainfall or rain drops in a more accurate manner. Further, an area in which the presence of rainwater or raindrops may be measured may be increased. The presence of the primary electric field lines outside of the outer surface, or outside of the housing of the gardening device facilitates more reliable measurement of rain drops, as the primary electric field lines are present extensively in an area where the raindrops may be present.

Before discussing the invention with the help of the drawings the invention will be briefly discussed in general. A rain sensor is located directly in a gardening device to detect rain and suspend irrigation. In the well-known capacitive humidity sensors, two opposing or planar electrodes are usually used to determine the dielectric in between. With this arrangement, however, the distance to the measuring medium is decisive. A particular challenge is to place the electrodes behind a housing and measure through the housing so that the electrical part can be completely isolated from the environment. As the thickness of the housing increases, the capacitance of the capacitor is primarily determined by the housing itself and is no longer affected by external moisture. According to the present invention, the secondary electric field lines of the third electrode propagate primarily in the housing, thereby pushing the primary electric field lines of the outer electrodes further away into the medium to be measured. As a result, depending on the setup, the sensitivity can be increased, particularly more than doubled, and a more precise moisture/rain measurements is possible.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** illustrates a perspective view of a gardening device in accordance with an exemplary embodiment of the present disclosure;
**FIG. 2** illustrates a schematic depiction of the gardening device in accordance with an exemplary embodiment of the present disclosure; and
**FIG. 3** illustrates steps of a method to sense rain drops on an outer surface of a gardening device in accordance with an exemplary embodiment of the present disclosure.

### DETAILED DESCRIPTION OF THE DRAWINGS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

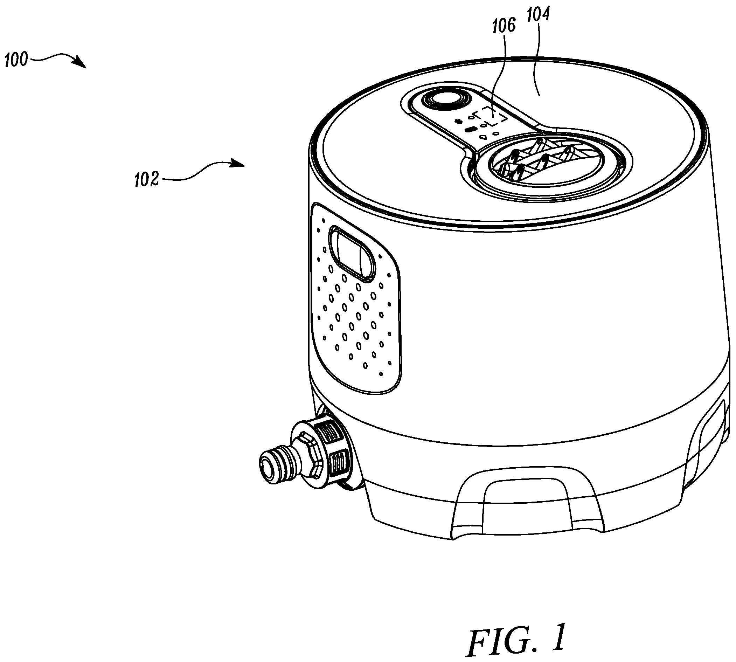

**FIG. 1** illustrates a perspective view of a gardening device **100** being a sprinkler, particularly a contour sprinkler.

The gardening device **100** has a housing **102.** The housing **102** has an outer surface **104.** The outer surface **104** is exposed to environmental elements such as dust, sunlight, and rainfall etc. The gardening device **100** may be used for a variety of applications including control tasks or any other suitable purpose. The housing **102** houses various components. However, only those components will be discussed which are relevant to the context of the present disclosure. It should be noted that the housing **102** may include components other than those described in the present disclosure. The gardening device **100** includes a sensor unit **106** housed within the gardening device **100.**

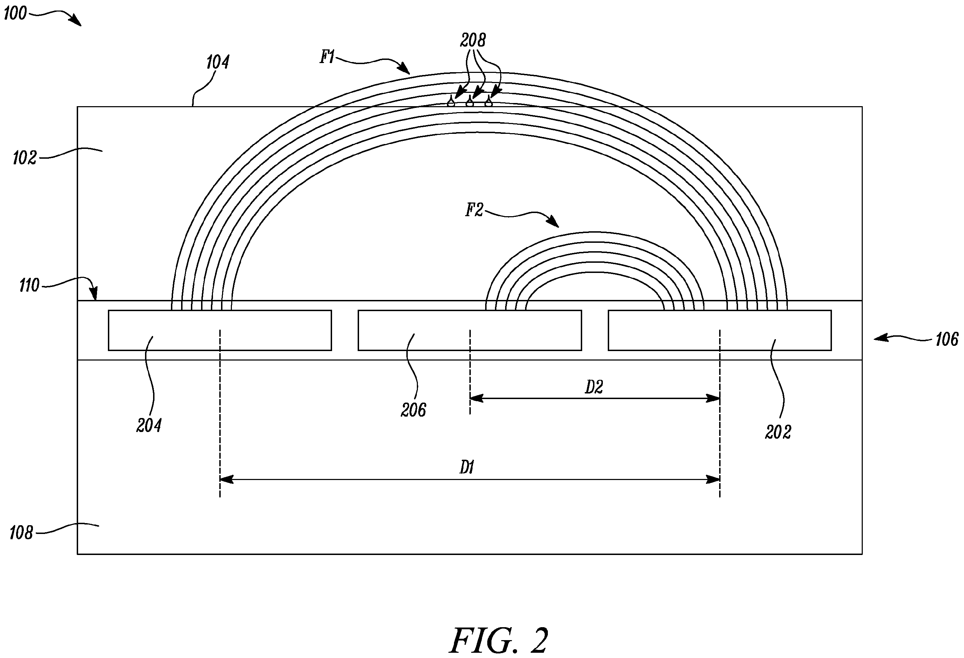

**FIG. 2** shows a schematic depiction of the gardening device **100.** The gardening device includes the sensor unit **106.** The gardening device **100** further includes a PCB **108.** The sensor unit **106** is mounted on a main surface **110** of the PCB **108.** Further, the sensor unit **106** is mounted inside the housing **102** with direct contact to an opposite surface of the outer surface **104** of the housing **102.** In other words, the sensor unit **106** is sandwiched in-between the PCB **108** and the housing **102.** The sensor unit **106** includes a first electrode **202** and a second electrode **204.** The first electrode **202** and the second electrode **204** generate a primary electric field F1 between the first electrode **202** and the second electrode **204.** The primary electric field **F1** comprises primary electric field lines. The second electrode **204** is placed at a first distance **D1** from the first electrode **202.** The first distance **D1** is measured from a middle of the first electrode **201** to a middle of the second electrode **202.**

The gardening device **100** further includes a third electrode **206.** The third electrode **206** is disposed between the first electrode **202** and the second electrode **204** seen in a direction perpendicular to the outer surface **104.** The third electrode **206** is placed at a second distance **D2** from the first electrode **202.** The first electrode **202** and the third electrode **206** generate a secondary electric field **F2** between the first electrode **202** and the third electrode **206.** The secondary electric field F2 comprises secondary electric field lines. The second distance **D2** is measured from the middle of the first electrode **201** to a middle of the third electrode **203.**

**FIG. 2** schematically shows the first electrode **202,** the second electrode **204** and the third electrode **206** arranged adjacent to each other. In the exemplary embodiment illustrated in **FIG. 2****,** the first distance **D1** is substantially twice the second distance **D2.** In another exemplary embodiment, the first distance **D1** is smaller than twice the second distance **D2.** In yet another exemplary embodiment, the first distance **D1** is larger than twice the second distance **D2.**

**FIG. 2** further shows the primary electric field lines of the primary electric field **F1** and the secondary electric field lines of the secondary electric field **F2.** The secondary electric field lines of the secondary electric field **F2** push the primary electric field lines of the primary electric field **F1** farther towards the outer surface **104** of the gardening device **100.** The secondary electric field lines of the secondary electrical field **F2** thereby direct the primary electric field lines of the primary electrical field **F1** farther away from the first electrode **202,** the second electrode **204** and the third electrode **203.** This allows the sensor unit **106** to detect raindrops **208** on the outer surface **104** of the gardening device **100.**

The first electrode **202** forms an excitation plate. The second electrode **204** forms a first sense plate, and the third electrode **206** forms a second sense plate. The first electrode **202,** the second electrode **204,** and the third electrode **206** together provide for sensing arrangement for rain drops on the outer surface **104** of the gardening device **100.** As may be seen from **FIG. 2****,** the first electrode **202,** the second electrode **204** and the third electrode **206** are each formed as a planar electrode. Further, the first electrode **202,** the second electrode **204** and the third electrode **206** are arranged together in one common plane.

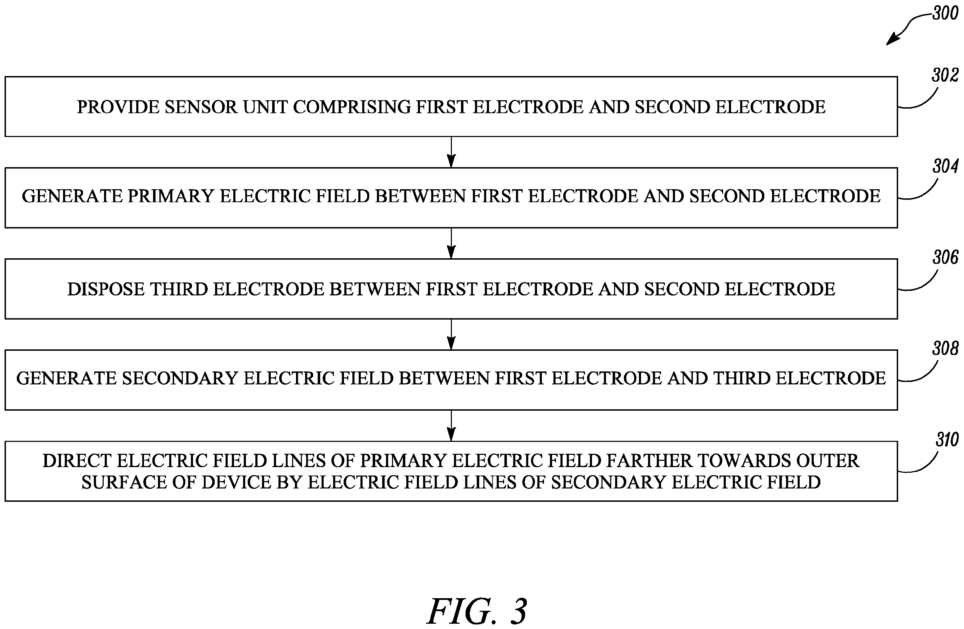

**FIG. 3** depicts a method **300** to sense rain drops on the outer surface **104** of the gardening device **100.** The method **300** includes in step **302** providing the sensor unit **106** comprising the first electrode **202** and the second electrode **204.** The method **300** includes in step **304** generating the primary electric field **F1** between the first electrode **202** and the second electrode **204.** The primary electric field F1 comprises primary electric field lines. The method **300** is characterized in that the method **300** includes in step **306** disposing a third electrode **206** between the first electrode **202** and the second electrode **204.** The method **300** includes in step **308** generating a secondary electric field **F2** between the first electrode **202** and the third electrode **206.** The secondary electric field **F2** comprises secondary electric field lines. The method **300** further includes in step **310** directing the primary electric field lines of the primary electric field **F1** farther towards the outer surface **104** of the gardening device **100,** wherein the secondary electric field lines of the secondary electric field **F2** push the primary electric field lines away from the first electrode **201,** the second electrode **202** and the third electrode **203.**

In the drawings and specification, there have been disclosed exemplary embodiments and examples of the invention and, although specific terms are employed, they are used in a generic and descriptive sense only and not for the purpose of limitation of the scope of the invention being set forth in the following claims.

### LIST OF ELEMENTS

- **100**: Gardening Device
- **102**: Housing
- **104**: Outer surface
- **106**: Sensor unit
- **108**: PCB
- **110**: Main surface
- **202**: First electrode
- **204**: Second electrode
- **206**: Third electrode
- **208**: Raindrops
- **300**: Method
- **302**: Step
- **304**: Step
- **306**: Step
- **308**: Step
- **310**: Step
- **F1**: Primary electric field
- **F2**: Secondary electric field
- **D1**: First distance
- **D2**: Second distance

## Claims

1. A sensor unit **(106)** for sensing rain drops **(208)** on an outer surface **(104)** of a device **(100),** particularly a gardening device **(100),** inside which the sensor unit **(106)** is mounted, wherein the sensor unit **(106)** comprises:
a first electrode **(202)** and a second electrode **(204)** generating a primary electric field **(F1)** between the first electrode **(202)** and the second electrode **(204),** wherein the primary electric field **(F1)** comprises primary electric field lines;
**characterized in that:**
the sensor unit **(106)** further comprises a third electrode **(206)** disposed between the first electrode **(202)** and the second electrode **(204);**
wherein the first electrode **(202)** and the third electrode **(206)** generate a secondary electric field **(F2)** between the first electrode **(202)** and the third electrode **(206),**
wherein the secondary electric field **(F2)** comprises secondary electric field lines, and
wherein the secondary electric field lines of the secondary electric field **(F2)** direct the primary electric field lines of the primary electric field **(F1)** farther towards the outer surface **(104)** of the gardening device **(100).**

2. The sensor unit **(106)** according to claim **1,**
wherein the secondary electric field lines of the secondary electric field **(F2)** direct the primary electric field lines of the primary electric field **(F1)** farther away from the first electrode **(202)** and/or the second electrode **(204).**

3. The sensor unit **(106)** according to claim **1** or claim **2,**
wherein:
the second electrode **(204)** is placed at a first distance **(D1)** from the first electrode **(202),** and
wherein the third electrode **(206)** is placed at a second distance **(D2)** from the first electrode **(202).**

4. The sensor unit **(106)** of claim **3,**
wherein the first distance **(D1)** is substantially twice the second distance **(D2).**

5. The sensor unit **(106)** of claim **3,**
wherein the first distance **(D1)** is smaller than twice the second distance **(D2).**

6. The sensor unit **(106)** of claim **3,**
wherein the first distance **(D1)** is larger than twice the second distance **(D2).**

7. The sensor unit **(106)** according to any one of the preceding claims,
wherein the first electrode **(202)** forms an excitation plate, and/or
wherein the second electrode **(204)** forms a first sense plate, and/or
wherein the third electrode **(206)** forms a second sense plate.

8. The sensor unit **(106)** according to any one of the preceding claims, wherein at least one of the first electrode **(202),** the second electrode **(204)** and the third electrode **(206)** is a planar electrode.

9. The sensor unit **(106)** according to any one of the preceding claims, wherein the first electrode **(202),** the second electrode **(204)** and the third electrode **(206)** are arranged in one common plane.

10. A gardening device **(100)** comprising
a housing **(102)** having an outer surface **(104),** and
a sensor unit **(106)** according to any one of the preceding claims,
wherein the sensor unit **(106)** is mounted inside the housing **(102).**

11. The gardening device **(100)** according to claim **10,** further comprising a PCB **(108),** wherein the sensor unit **(106)** is mounted on a main surface **(110)** of the PCB **(108).**

12. The gardening device **(100)** according to claim **10** or claim **11,**
wherein the sensor unit **(106)** is mounted inside the housing **(102)** with direct contact to the housing **(102).**

13. The gardening device **(100)** according to any one of the claims **10** to **12,** wherein the gardening device **(100)** is a watering device, a contour sprinkler, a robotic mower, or a watering computer.

14. A method **(300)** to sense rain drops **(208)** on an outer surface **(104)** of a gardening device **(100),** the method **(300)** comprising:
providing a sensor unit **(106)** comprising a first electrode **(202)** and a second electrode **(204);**
generating a primary electric field **(F1)** between the first electrode **(202)** and the second electrode **(204),** wherein the primary electric field **(F1)** comprises primary electric field lines;
**characterized in that:**
disposing a third electrode **(206)** between the first electrode **(202)** and the second electrode **(204);**
generating a secondary electric field **(F2)** between the first electrode **(202)** and the third electrode **(206),** wherein the secondary electric field **(F2)** comprises secondary electric field lines; and
directing the primary electric field lines of the primary electric field **(F1)** farther towards the outer surface **(104)** of the gardening device **(100)** by the secondary electric field lines of the secondary electric field (F2).
